# EUROPEAN PATENT SPECIFICATION

(11) **EP 2 465 713 B1**
(45) Date of publication and mention of the grant of the patent: **07.12.2016**
(21) Application number: 09848294.6
(22) Date of filing: 14.10.2009
(51) Int. Cl.: B60G 3/00, F16C 11/06, F16C 11/00

(54) **BALL JOINT STRUCTURE AND MANUFACTURING METHOD THEREOF**
KUGELGELENKAUFBAU UND VERFAHREN ZU SEINER HERSTELLUNG
STRUCTURE D'UN JOINT À ROTULE ET SON PROCÉDÉ DE FABRICATION

(30) Priority: 10.08.2009 KR 20090073221; 10.08.2009 KR 20090073222; 10.08.2009 KR 20090073223
(43) Date of publication of application: 20.06.2012
(73) Proprietor: Iljin Co. Ltd., Gyeongsanbuk-do 780-952 (KR)
(72) Inventor: KWON, Tae-Sung, Gyeongju-si Gyeongsangbuk-do 780-924 (KR)
(74) Representative: Lavoix
(86) International application number: PCT/KR2009/005895
(87) International publication number: WO 2011/019108

(56) References cited:
- EP-A2- 0 832 769
- WO-A1-2008/074308
- WO-A1-2008/074308
- WO-A2-02/47925
- DE-A1-102004 061 057
- JP-A- 9 072 330
- JP-A- 9 072 330
- JP-U- H 053 629
- KR-A- 20020 055 814
- KR-A- 20070 024 265
- KR-B1- 100 614 207
- KR-B1- 100 891 048
- US-A- 4 016 950
- US-B1- 7 153 055

## Description

### [Technical field]

The present invention relates to a ball joint structure and a manufacturing method thereof. More particularly, the present invention relates to a ball joint structure and a manufacturing method thereof which simplifies a manufacturing process, reduces manufacturing cost and weight of the ball joint structure, and secures durability of the ball joint structure.

### [Background]

Generally, a ball joint is a main component for connecting a suspension system and an axle shaft to a vehicle body, and plays an important role in functions of a vehicle chassis. Typically, each wheel of a vehicle is supported by a wheel supporting device, and the wheel supporting device is connected to the vehicle body through a connecting rod. In this case, the ball joint is mounted at an end portion of the connecting rod close to the wheel supporting device, and the ball joint defines a pivoting point of the connecting rod in the wheel supporting device. In addition, the ball joint can be used at the connecting rod and the pivoting point in the axle shaft.

EP 0 832 769 A2, which is considered as the closest prior art, discloses a stabilizer link rod for linking to suspension arm the stabilizer rotatably fitted to the chassis of a car. The link rod comprises a rod, a socket provided at either end of the rod and having a bore with at least one opening, bearing provided in the bore of the socket, and a ball stud of which a spherical head is grasped in the bearing. Further, the rod and sockets at the opposite ends of the rod are integrally molded in a synthetic resin, and the bearing is molded in a synthetic resin having a good sliding property.

JP H 09-72330 discloses a ball joint is formed in an upper and lower two dividing type which is constituted by an upper bearing and a lower bearing, the inner circumference of the upper bearing is provided with an upper inner spherical surface fit to the spherical head part upper surface of a ball stud, and the inner circumference of the lower bearing is provided with a lower inner spherical surface fit to a spherical head part bottom surface. In the end part opposed to the bearings, an annular outer peripheral flange is formed on the upper bearing, and an annular inner circumferential flange is formed on the lower bearing, and both flanges are engaged with each other.

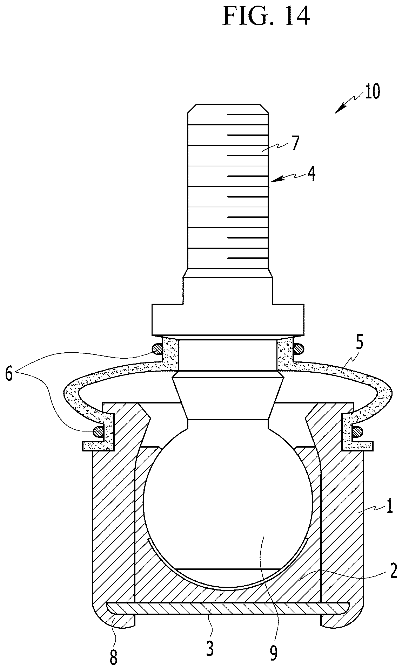

Hereinafter, a structure of a conventional ball joint will be explained with reference to FIG. 14.

The conventional ball joint 10 includes a metal reinforcement 1, a bearing 2, a cap 3, a ball stud 4, and a dust cover 5.

The metal reinforcement 1 is made of metal material for reinforcing the bearing, and upper and lower ends of the metal reinforcement 1 are open. A deformable portion 8 is integrally formed at the lower end of the metal reinforcement 1.

The bearing 2 is mounted in the metal reinforcement 1, and is typically made of a plastic material. An upper end of the bearing 2 is open, and a space in which a ball of the ball stud 4 is inserted is formed.

The cap 3 is adapted to support a lower portion of the bearing 2 and closes the lower end of the metal reinforcement 1. That is, after the bearing 2 is positioned in the metal reinforcement 1, the lower end of the metal reinforcement 1 is closed by the cap 3. At this time, the deformable portion 8 of the metal reinforcement 1 is protruded lower than the cap 3, and is then bent toward the cap 3 so as to assemble the cap 3 with the metal reinforcement 1.

The ball stud 4 has the ball 9 formed at one end thereof and a screw thread 7 formed at the other end thereof. The ball 9 is inserted in the space of the bearing 2 and is pivoted therein.

The dust cover 5 prevents foreign substances from entering between the bearing 2 and the ball 9. The dust cover 5 is made of resilient material such as a rubber, is inserted in the ball stud 4, and is mounted above the metal reinforcement 1. In addition, the dust cover 5 includes fixing members 6 for fixing upper and lower ends of the dust cover 5.

According to the conventional ball joint, the metal reinforcement of metal material is manufactured by casting and is then ground. Therefore, the weight of the ball joint and manufacturing cost increase. In addition, since several or dozens of ball joints are used in the vehicle, the total weight of the vehicle increases if the weight of one ball joint increases. Therefore, fuel consumption of the vehicle may be deteriorated.

In addition, the bearing 2 made of plastic material is often damaged while the ball 9 of the ball stud 4 is press-fitted into the bearing 2.

Further, since assembly of the ball joint 10 is completed by bending the deformable portion 8 of the metal reinforcement 1 toward the cap 3, the manufacturing process becomes complicated. In addition, the cap 3 and the bearing 2 may be damaged during the bending process.

### [CONTENTS OF THE INVENTION]

To achieve such objects, a ball joint structure according to claim 1 is provided.

The ball is formed at one end of the ball stud, the first bearing covers an exterior circumference of a hemisphere portion of the ball, and the second bearing is mounted at an opposite side of the first bearing so as to cover an exterior circumference of the ball around the ball stud.

The first bearing and the second bearing respectively have stepped parts having shapes corresponding to each other at coupled portions.

One of the first bearing and the second bearing has a fixing protrusion at a coupled surface thereof, and the other of the first bearing and the second bearing has a fixing recess corresponding to the fixing protrusion at a coupled surface thereof.

Both ends of the ball housing are protruded inwardly so as to respectively form a first supporting portion and a second supporting portion for preventing separation of the bearing.

To achieve such objects, a ball joint structure according to an exemplary embodiment of the present invention may include a rod having an end portion disposed apart from the ball housing; and a socket, together with the ball housing, insert-molded so as to connect the rod with the ball housing.

A ball joint structure according to an exemplary embodiment of the present invention may include: a bushing housing distanced from the ball housing and connected to a vehicle body; and an arm connecting the ball housing with the bushing housing.

To achieve such objects, a manufacturing method of a ball joint according to claim 8 is provided.

The step 1) includes mounting a first bearing with a first stepped part formed at an upper end thereof on a lower portion of the ball of the ball stud; and coupling the first stepped part with a second stepped part by placing the second bearing with the second stepped part corresponding to the first stepped part at a lower end thereof onto the ball.

A first supporting portion and a second supporting portion are integrally formed respectively at an upper end and a lower end of the ball housing and/or one side portion of the socket at the step 3).

### [BRIEF DESCRIPTION OF THE DRAWINGS]

FIG. 1 is a cross-sectional view of a ball joint according to the first exemplary embodiment of the present invention.
FIG. 2 is a perspective view of a bearing used in a ball joint according to the first exemplary embodiment of the present invention.
FIG. 3 is a cross-sectional view of a metal reinforcement used in a ball joint according to the first exemplary embodiment of the present invention.
FIG. 4 is a flowchart of a manufacturing process of a ball joint according to the first exemplary embodiment of the present invention.
FIG. 5 is an exploded assembly view of a stabilizer link according to the second exemplary embodiment of the present invention.
FIG. 6 is a cross-sectional view of a stabilizer link according to the second exemplary embodiment of the present invention.
FIG. 7 is a perspective view of a bearing applied to a stabilizer link according to the second exemplary embodiment of the present invention.
FIG. 8 is a perspective view of a control arm of a vehicle according to the third exemplary embodiment of the present invention.
FIG. 9 is a cross-sectional view showing a ball joint part of a control arm of a vehicle according to the third exemplary embodiment of the present invention.
FIG. 10 is a cross-sectional view showing a ball joint part of a control arm of a vehicle according to the third exemplary embodiment of the present invention.
FIG. 11 is an exploded perspective view of a bearing provided at a control arm of a vehicle according to the third exemplary embodiment of the present invention.
FIG. 12 is a cutoff perspective view of a reinforcement provided at a control arm of a vehicle according to the third exemplary embodiment of the present invention.
FIG. 13 is a cutoff perspective view of a reinforcement provided at a control arm of a vehicle according to the third exemplary embodiment of the present invention.
FIG. 14 is a cross-sectional view of a conventional ball joint. [Best Mode]

Preferable exemplary embodiments of the present invention will hereinafter be explained in detail with reference to the accompanying drawings.

A ball joint according to an exemplary embodiment of the present invention is used for a suspension system such as a stabilizer link, a lower arm, and a steering mechanism. The suspension system connects an axle shaft with a vehicle body and controls vibration, impact, or external force delivered from a road to the axle shaft when driving to not be directly delivered to the vehicle body. The steering mechanism controls a moving direction of the vehicle.

Since the suspension system and the steering mechanism are well-known to a person of ordinary skill in the art, they are not illustrated in detail in the drawings and detailed explanation thereof will be omitted in this specification.

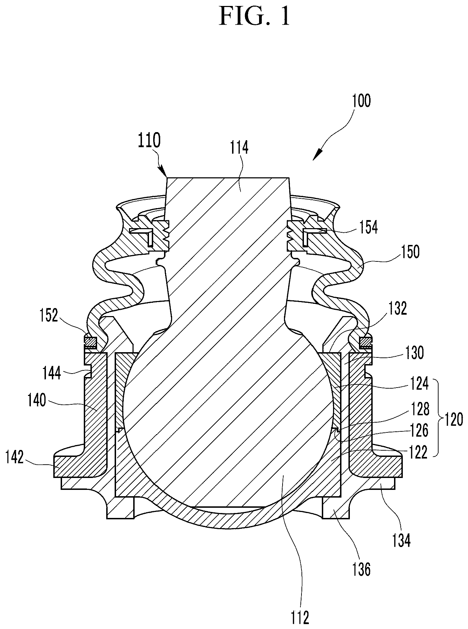

Referring to FIG. 1 to FIG. 3, a ball joint 100 according to an exemplary embodiment of the present invention will be described in detail.

As shown in FIG. 1, the ball joint 100 according to an exemplary embodiment of the present invention includes a ball stud 110, a metal reinforcement 140, a bearing 120, a ball housing 130, and a dust cover 150.

The ball stud 110 has a ball 112 with a spherical shape formed at a lower end thereof, and a stud 114 with a cylindrical shape integrally formed at an upper portion of the ball 112. The stud 114 extends upwardly, and a screw thread may be formed at an exterior circumference of the stud 114. The screw thread is formed as a typical male thread such that the stud 114 is coupled to an end portion of the stabilizer bar or a bracket of the lower arm.

The metal reinforcement 140 has a cylindrical shape and is made of a metal material through a press process or drawing process so as to secure strength of the ball joint 100. A lower end of the metal reinforcement 140 is bent outwardly so as to form a seat 142.

When the ball joint 100 is mounted at the suspension system or the steering mechanism, members of each system or each mechanism are seated on the seat 142.

In addition, a mounting groove 144 for a snap ring is formed at an upper end portion of an exterior circumference of the metal reinforcement 140. In order to prevent the members of each system or each mechanism seated on the seat 142 from being separated, the snap ring (not shown) is inserted in the mounting groove 144 for snap ring. Instead of using such a snap ring, the metal reinforcement 140 can be press-fitted into the members of each system or each mechanism.

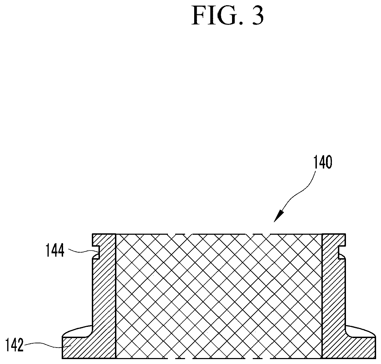

In one or more embodiments, an interior circumference of the metal reinforcement 140 is knurled as shown in FIG. 3. The interior circumference of the metal reinforcement that is knurled improves coupling strength between the metal reinforcement 140 and the ball housing 130 when insert-molding the ball housing 130. Accordingly, the metal reinforcement 140 and the ball housing 130 made of different materials can be coupled.

The bearing 120 is formed with a cup shape having a space therein by coupling first and second bearings 122 and 124. The bearing 120 is made of a synthetic resin material. The inner space has a spherical shape having a similar size to the ball 112.

Therefore, the ball 112 of the ball stud 110 is pivotably inserted in the space of the bearing 120. In addition, since the exterior surface of the ball 112 should slide on an interior surface of the bearing 120 smoothly, an oil line (not shown) or an oil groove (not shown) can be formed so as to receive lubricant therein.

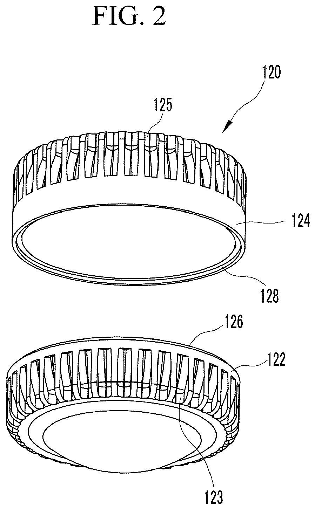

As shown in FIG. 1 and FIG. 2, the first bearing 122 has a cup shape having an upper end being open and a lower end being closed, and the second bearing 124 has an annular shape having both ends being open.

An interior circumference of an upper end of the first bearing 122 is protruded upwardly in an axial direction (herein, this represents a direction of an axis of the ball stud (or the stud)) so as to form a first stepped part 126, and first protrusions and depressions 123 are formed at an exterior circumference of the first bearing 122.

An exterior circumference of a lower end of the second bearing 124 is protruded downwardly in the axial direction so as to form a second stepped part 128 corresponding to the first stepped part 126, and second protrusions and depressions 125 are formed at an exterior circumference of the second bearing 124.

In a case that the first and second bearings 122 and 124 are coupled, the first stepped part 126 closely contacts the second stepped part 128 such that a molten resin is prevented from flowing into the bearing 120.

In addition, the first and second protrusions and depressions 123 and 125 improve coupling strength between the ball housing 130 and the bearing 120 as a consequence of the molten resin being inserted in the depressions and then solidified when insert-molding the ball housing 130.

If the bearing 120 is formed by coupling the first and second bearings 122 and 124 that are separately manufactured, the ball 112 of the ball stud 110 is not press-fitted into the inner space of the bearing 120. Therefore, damage to the bearing 120 may be prevented.

That is, the first bearing 122 is mounted on the ball 112 so as to cover a lower end portion of the ball 112, and the second bearing 122 is put on the ball 112 from above. Coupling of the ball stud 110 and the bearing 120 is completed by closely contacting the first and second stepped parts 123 and 125.

The ball housing 130 is formed by insert-molding the molten synthetic resin (hereinafter, this will be called "molten resin") into the metal reinforcement 140 and the bearing 120 so as to reduce weight of the ball joint 100 and simplify the manufacturing process thereof.

According to conventional arts, the metal reinforcement 140 and the ball housing 130 are integrally made of the same metal material. Therefore, the ball joint 100 is very heavy. The metal reinforcement 140, however, is formed to be thin and the ball housing 130 of synthetic resin material is coupled between the metal reinforcement 140 and the bearing 120 according to the present exemplary embodiment. Therefore, the weight of the ball joint 100 may be reduced.

In addition, since the ball housing 130 is insert-molded to the metal reinforcement 140 having the knurled interior circumference and the bearing 120 having the first and second protrusions and depressions 123 and 125 at the exterior circumference thereof, coupling strength among the ball housing 130, the metal reinforcement 140, and the bearing 120 is high. Therefore, pull-out strength of the ball joint 120 (force in the axial direction to which the ball joint can endure until the bearing is separated from the metal reinforcement) may be improved.

The ball housing 130 includes first and second supporting portions 132 and 136 and a shoulder 134. The first and second supporting portions 132 and 136 and the shoulder 134 are formed simultaneously when insert-molding the ball housing 130. Therefore, the manufacturing process of the ball joint 100 may be simplified and the manufacturing cost thereof may be reduced.

The ball housing 130 can be made of the synthetic resin material, but the material of the ball housing 130 can be different from that of the bearing 120.

The first supporting portion 132 is protruded inwardly from the upper end of the ball housing 130, and prevents the bearing 120 from being separated upwardly from the ball housing 130.

The second supporting portion 136 is protruded inwardly from the lower end of the ball housing 130, and prevents the bearing 120 from being separated downwardly from the ball housing 130.

According to conventional arts, a cap is disposed at a lower end of a bearing and a lower end portion of a metal reinforcement is bent toward the cap so as to prevent the bearing from being separated downwardly. In this process, the bearing and the cap may be damaged.

The second supporting portion 136, however, is integrally formed with the ball housing 130 through insert-molding according to an exemplary embodiment of the present invention. Therefore, the cap is not necessary and bending process of the metal reinforcement can be omitted. Therefore, the number of components may decrease, the manufacturing cost may be reduced, and the manufacturing process may be simplified.

The shoulder 134 is protruded outwardly from a lower end portion of the ball housing 130. It is preferable that the shoulder 134 contacts a lower end of the seat 142.

The dust cover 150 prevents foreign substances such as dust and water from entering between the bearing 120 and the ball 112. A lower end of the dust cover 150 is fixed to an exterior circumference of an upper end portion of the ball housing 130 by an O-ring 152. A fixing sheet 154 is inserted into an upper end portion of the dust cover 150 such that the upper end portion of the dust cover 150 is press-fitted to the stud 114 of the ball stud 110. In one or more exemplary embodiments, upper and lower ends of the dust cover 150 can be fixed by other fixing means such as a ring or a clip.

It is preferable that the dust cover 150 is made of a resilient resin material such as a rubber.

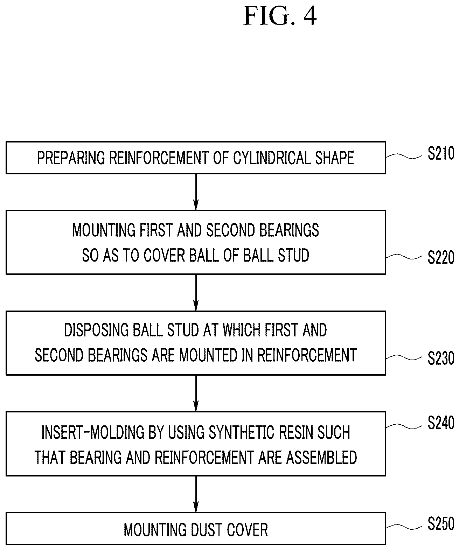

Hereinafter, a manufacturing method of the ball joint according to an exemplary embodiment of the present invention will be described in detail with reference to FIG. 4.

Firstly, the metal reinforcement (case) 140 with a cylindrical shape shown in FIG. 1 and FIG. 3 is prepared at step S210. The metal reinforcement 140 is made of a metal material and is manufactured by a press process or a drawing process. In addition, the interior circumference of the metal reinforcement 140 is knurled.

Further, the first and second bearings 122 and 124 are mounted on the ball 112 so as to cover the ball 112 of the ball stud 110 at step S220.

As described above, the first bearing 122 is mounted on the ball 112 so as to cover a lower end portion of the ball 112, and the second bearing 122 is put on the ball 112 from above. Coupling of the ball stud 110 and the bearing 120 is completed by closely contacting the first and second stepped parts 123 and 125.

After that, the metal reinforcement 140 is inserted in a mold that is manufactured in advance, and the ball stud 110 at which the first and second bearings 122 and 124 are mounted in the metal reinforcement 140. The first and second bearings 122 and 124 are disposed apart from the metal reinforcement 140 by a predetermined distance (i.e., the ball housing 130 is filled by the predetermined distance). Therefore, preparation of insert-molding is completed at step S230.

If the preparation of the insert-molding is completed, the molten synthetic resin (molten resin) is poured into the mold. Thereby, the ball housing 130 is insert-molded so as to couple the synthetic resin with the bearing 120 and the metal reinforcement 140 at step S240.

At this time, since the molten resin is sufficiently filled in the knurled interior circumference of the metal reinforcement 140 and the depressions of the first and second protrusions and depressions 123 and 125 and is then solidified, the coupling strength between the ball housing 130, the metal reinforcement 140, and the bearing 120 and the pull-out strength may be improved.

Meanwhile, since the bearing 120 is formed by coupling the first and second bearings 122 and 124 according to an exemplary embodiment of the present invention, the molten resin can penetrate through the bearing 120 and permeate to the ball 112 of the ball stud 110. In this case, the ball joint 100 cannot be used.

To solve such problems, the first and second stepped parts 126 and 128 are formed respectively at the first and second bearings 122 and 124, and the first and second bearings 122 and 124 are coupled by closely contacting the first and second stepped parts 126 and 128 with each other. Therefore, the molten resin cannot reach the ball 112.

After the dust cover 150 is pushed from the stud 114 of the ball stud 110 toward the ball 112, the lower end of the dust cover 150 is fixed to the upper end of the ball housing 130 by using the O-ring 152. Thereby, manufacturing of the ball joint 100 is completed.

At this time, the fixing sheet 154 is inserted into the upper end portion of the dust cover 150 such that the upper end portion of the dust cover 150 is press-fitted to the stud 114 of the ball stud 110. On the contrary, the upper end of the dust cover 150 can be fixed to the stud 114 through a fixing means such as a clip or a ring.

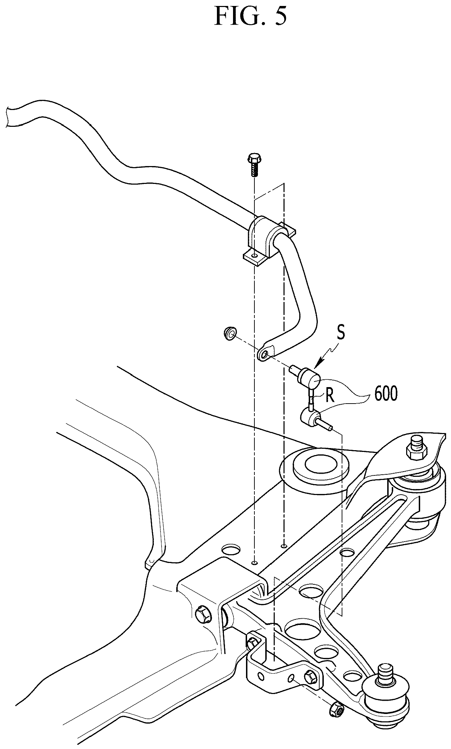

Referring to FIG. 5, a stabilizer link (typically called "rod bar" or "step link" in the art) according to an exemplary embodiment of the present invention is used for the suspension system. The suspension system connects the axle shaft with the vehicle body and controls vibration, impact, or external force delivered from the road to the axle shaft when driving to not be directly delivered to the vehicle body. Therefore, the suspension system prevents damage to the vehicle body and freight, and enables a comfortable ride.

Since the suspension system is a well-known suspension system applicable to vehicles, it is not illustrated in detail in the drawings and detailed explanation of the same will be omitted in this specification.

The stabilizer link S is a component connected between the stabilizer bar and the lower arm, or between the stabilizer bar and a shock absorber (not shown).

Ball joints 600 are formed respectively at upper and lower end portions of the stabilizer link S, the ball joints of the upper end portion are engaged to both end portions of the stabilizer bar, and the ball joint of the lower end portion is engaged to a mounting bracket provided at the lower arm.

The ball joints 600 at the upper and lower end portions of the stabilizer link S have the same structures. For convenience, only an engage unit provided at the upper end portion of the stabilizer link S will be illustrated in FIG. 5.

Referring to FIG. 5 to FIG. 7, the stabilizer link S according to an exemplary embodiment of the present invention will be described in detail.

The stabilizer link S according to an exemplary embodiment of the present invention includes a rod R, a ball housing 700, a bearing 800, a ball stud 732, and a dust cover 734.

The rod R connects the ball joints 600 with each other, and is made of a metal material. The rod R is disposed apart from a side portion of the bearing 800 by a predetermined distance.

The ball housing 700 is formed by insert-molding the synthetic resin into the bearing 800 and the rod R so as to reduce weight of the stabilizer link S and simplify the manufacturing process thereof. Compared with the conventional stabilizer link S where the rod R and the bearing 800 are coupled by a welding process, weight may be reduced, coupling strength may be improved, manufacturing process may be simplified, and manufacturing cost may be reduced.

After the bearing 800 and the rod R are disposed apart from each other in a mold (not shown), the ball housing 700 is insert-molded by inserting the synthetic resin into the mold. Therefore, the rod R, a rod socket 710, and the ball housing 700 are integrally formed with each other.

An upper end of the ball housing 700 is open and a lower end of the ball housing 700 is closed. A first blocking portion 720 is formed at an upper portion of an interior circumference of the ball housing 700 and a second blocking portion 730 are formed at a lower portion of the interior circumference of the ball housing 700.

Since upper and lower ends of the bearing 800 are blocked by the first and second blocking portions 720 and 730, the bearing 800 is strongly fixed in the ball housing 700 in a state of being insert-molded.

In addition, a receiving groove 736 is formed at an exterior circumference of the ball housing 700 opposite to the first blocking portion 720.

The receiving groove 736 has such a shape that an O-ring 738 for fixing the dust cover 734 that will be described below can be inserted therein.

According to the stabilizer link S of an exemplary embodiment of the present invention, strength of a coupling portion of the ball housing 700 and the ball stud 732 can be deteriorated because the ball housing 700 made of the synthetic resin material is insert-molded. Therefore, a plurality of first and second protrusions and depressions 812 and 822 may be formed at an exterior surface of the bearing 800 interposed at the coupling portion of the ball housing 700 and the ball stud 732.

Thereby, strength of the stabilizer link S may be improved.

Meanwhile, the rod socket 710 is integrally formed with a side of the reinforcing member mounting portion, and the rod R is mounted in the rod socket 710.

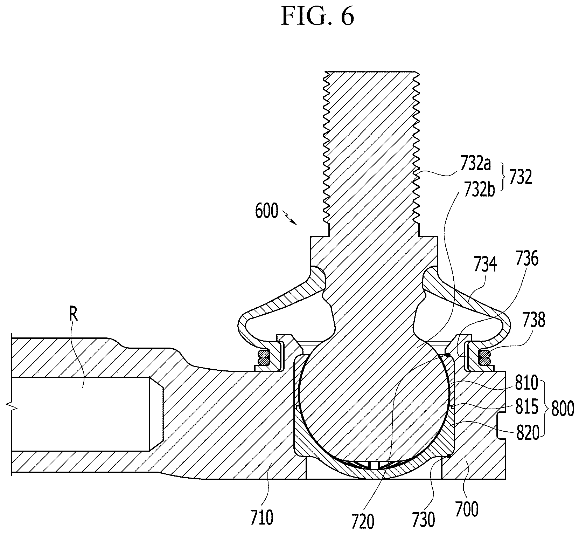

As shown in FIG. 6, the bearing 800 is inserted in an opening (reference numeral is not designated) of the ball housing 700, and the bearing 800 made of plastic material is divided into two parts.

The bearing 800 is formed such that first and second bearings 820 and 810 are separately manufactured and are coupled. Stepped parts 818 coupled with each other are formed at coupling portions of the first and second bearings 820 and 810.

That is, both ends of the second bearing 810 are open, and the stepped parts 818 are formed circumferentially at an interior circumference or an exterior circumference of one end of the second bearing 810. Only one end of the first bearing 820 is open, and a shape corresponding to the stepped part 818 is formed at an exterior circumference or an exterior circumference of the opened end of the first bearing 820.

Further, since cross-sections of the stepped parts 818 have a " 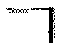 " shape and a " 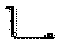 " shape, the stepped parts 818 are engaged with each other through surface-to-surface contact.

If the stepped parts 818 having above-mentioned shapes are engaged, the molten resin is not inserted into the bearing 800 during insert-molding.

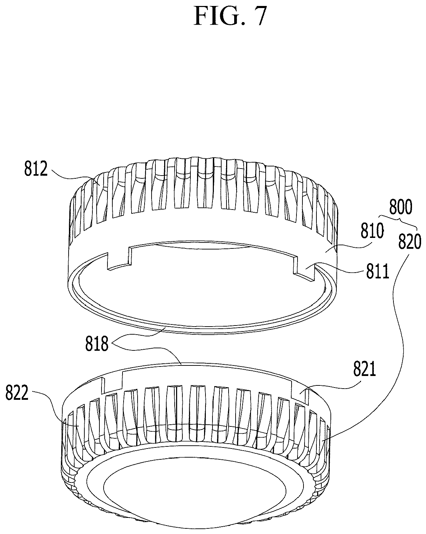

In addition, a fixing protrusion 811 and a fixing recess 821 may be formed at the coupling portions of the first and second bearings 820 and 8100, as shown in FIG. 7.

That is, if the fixing protrusion 811 and the fixing recess 821 are formed at positions corresponding to each other and are coupled, unnecessary rotation of the first and second bearings 820 and 810 is prevented.

In addition, since the first and second bearings 820 and 810 can be separated, a worker can assemble the bearing 800 with the ball stud 732 easily.

That is, after the stud 732a of the ball stud 732 penetrates through the second bearing 810 so as to assemble a stud 732a and the second bearing 810, the first bearing 820 is coupled with the second bearing 810. Then, assembling of the ball stud 732 and the bearing 800 is completed.

Therefore, because a press-fitting process of the prior arts can be omitted when assembling the ball stud 732 and the bearing 800, the worker can easily perform assembly.

Meanwhile, a space (reference numeral is not designated) having an opened upper end is formed in the bearing 800. The upper end of the bearing 800 is bent inwardly such that a ball 732b of the ball stud 732 that will be described below is press-fitted in and is not separated from the bearing 800. In addition, the space of the bearing 800 has a spherical shape having the same shape as an exterior surface of the ball 732b such that the ball 732b slidingly contacts and pivots in the space of the bearing.

Because the exterior surface of the ball 732b can smoothly slide on the interior surface of the bearing 800, oil lines (not shown) or oil grooves (not shown) can be formed so as to receive lubricant.

The dust cover 734 prevents foreign substances such as dust and water from entering between the bearing 800 and the ball 732b.

It is preferable that the dust cover 734 is made of a resilient resin material such as a rubber. When the dust cover 734 covers the ball housing 700, the dust cover 734 is pushed into the ball stud 732 from the stud 732a to the ball 732b. Therefore, an upper end of the dust cover 734 closely contacts a lower end of the stud 732a by elastic deformation.

That is, the O-ring 738 is made of a rubber material. If the O-ring 738 tightens a lower end portion of the dust cover 734, the O-ring 738 is received and fixed in the receiving groove 736 of the ball housing 700. Therefore, the dust cover 734 can be strongly fixed at the ball stud 732. A ring or a clip may be applied as the O-ring 738.

Hereinafter, a manufacturing method of the stabilizer link according to an exemplary embodiment of the present invention will be described in detail.

First, the rod R is manufactured. Then, the rod R and the bearing 800 are disposed apart from each other in a mold manufactured in advance.

At this time, the ball 732b of the ball stud 732 is coupled to the second bearing 810 of the bearing 800, and the first bearing 820 is coupled to the second bearing 810.

After that, the bearing 800 to which the ball stud 732 is coupled is inserted into the opening of the ball housing 700.

In addition, the molten synthetic resin is poured into the mold and the synthetic resin is insert-molded so as to cover the bearing 800 and the rod R. Thereby, the rod socket 710 and the ball housing 700 are formed. As described above, the ball housing 700 is insert-molded such that the rod R, the rod socket 710, and the assembled bearing 800 are integrally formed with each other.

Finally, after the dust cover 734 is pushed onto the ball stud 732 from the stud 732a to the ball 732b, the lower end of the dust cover 734 is tightened to the ball housing 700 and is fixed by the O-ring 738. Thereby, mounting of the dust cover 734 is completed.

A control arm according to exemplary embodiments of the present invention is used for a suspension system and a steering mechanism. The suspension system and the steering mechanism connect the axle shaft with the vehicle body and control vibration, impact, or external force delivered from the road to the axle shaft when driving to not be directly delivered to the vehicle body.

Since the suspension system and the steering mechanism are well-known to a person of ordinary skill in the art, they are not illustrated in detail in the drawings and detailed explanation thereof will be omitted in this specification.

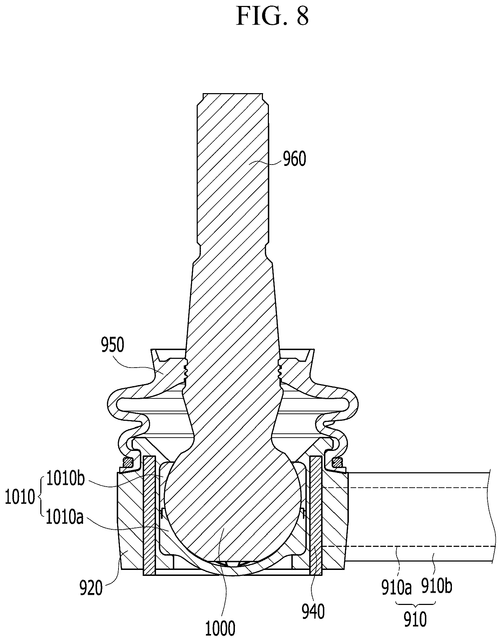

Referring to FIG. 8, a control arm 900 includes an arm 910, a ball housing 920, a bearing 1010, a metal reinforcement 940 and 980, a dust cover 950, a stud 960, and a bushing housing 970.

The bushing housing 970 is formed at one end of the arm 910, and a bushing 990 is press-fitted into an interior circumference thereof. The bushing 990 is connected to the vehicle body (not shown) of the vehicle through a hinge, and the control arm 900 is rotatable with respect to the bushing housing 970.

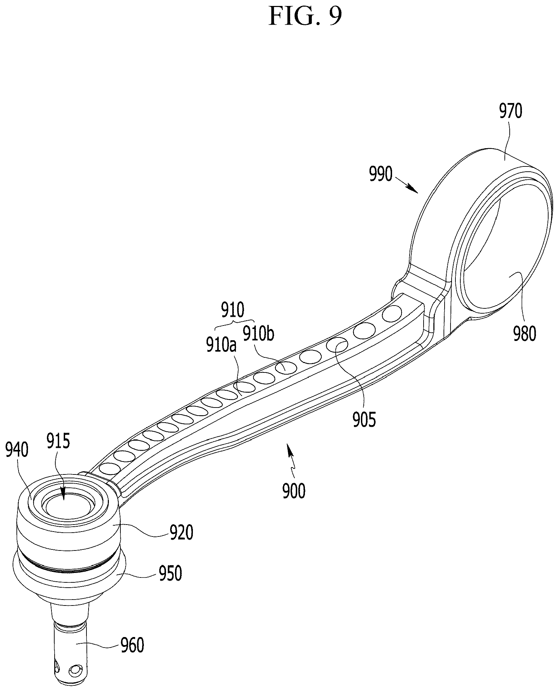

The ball housing 920 is formed at the other end of the arm 910, a bearing 1010 is mounted in the ball housing 920, a ball 1000 (please refer to FIG. 9) is mounted in the bearing 1010, and the stud 960 is extended and protruded from the ball 1000 to the exterior. Herein, the stud 960 is connected to a wheel (not shown) of the vehicle and rotates with wheel movement.

In addition, a metal reinforcement 940 for covering a circumference of the bearing 1010 is provided in the ball housing 920.

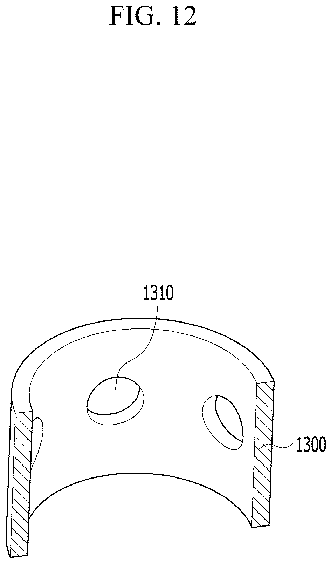

As shown in the drawings, the metal reinforcement 940 is manufactured such that an edge of an end portion of the metal reinforcement 940 is protruded to the exterior of the ball housing 920, and a detailed structure thereof will be described with reference to FIG. 12 and FIG. 6.

The arm 910 connecting the bushing housing 970 and the ball housing 920 includes a metal arm 910a made of a metal material and a molding arm 910b made of a resin material.

It is preferable that the molding arm 910b is insert-molded together with the metal arm 910a so as to cover an exterior surface of the metal arm 910a.

Penetration holes 905 are formed at the metal arm 910a, and the penetration holes 905 are filled with the resin forming the molding arm 910b. Therefore, weight may be reduced but strength may be improved.

A metal reinforcement 980 is provided in the bushing housing 970, and it is preferable that the bushing housing 970, together with the metal reinforcement 980, is insert-molded.

Referring to FIG. 9, a spherical ball 1000 is formed at a lower end portion of the stud 960, and the bearing 1010 is engaged with an exterior circumference of the ball 1000.

So as to cover the ball 1000 except the stud 960 and a portion close to the stud 960, the bearing 1010 includes a first bearing 1010a and a second bearing 1010b.

The first bearing 1010a has a cup shape that covers a lower hemisphere of the ball 1000, and the second bearing 1010b has a ring shape that covers an exterior surface of the ball 1000 along a circumference of the stud 960.

The first bearing 1010a is mounted so as to cover the exterior surface of the lower hemisphere of the ball 1000, and the second bearing 1010b is mounted so as to cover the exterior surface of the ball 1000 around the stud 960. After that, the first bearing 1010a is coupled to the second bearing 1010b.

In a state that the bearing 1010 is completely mounted on the ball 1000, the cylindrical metal reinforcement 940 is positioned apart from the exterior surface of the bearing 1010 with a space along a circumference thereof. In this state, the resin is insert-molded into the mold so as to integrally form the ball housing 920.

According to conventional arts, the ball 1000 is press-fitted into the bearing formed as one piece. Therefore, high fitting pressure is necessary and it is hard to manufacture.

The bearing 1010, however, is not press-fitted with the ball 1000 but is separated into the first bearing 1010a and the second bearing 1010b, and the first bearing 1010a and the second bearing 1010b are separately mounted on the ball 1000 according to an exemplary embodiment of the present invention. Therefore, the assembly process may be facilitated.

A dust cover 950 is mounted along an upper circumferential portion of the ball housing 920 and a circumference of the stud 960 close to the ball 1000. The dust cover 950 is fixed to the ball housing 920 through a snap ring and is threaded to the stud 960.

Referring to FIG. 9, an end portion of the metal arm 910a of the arm 910 is connected to the metal reinforcement 940 so as to improve strength thereof, and the molding arm 910b and the ball housing 920 are formed integrally through one insert-molding process.

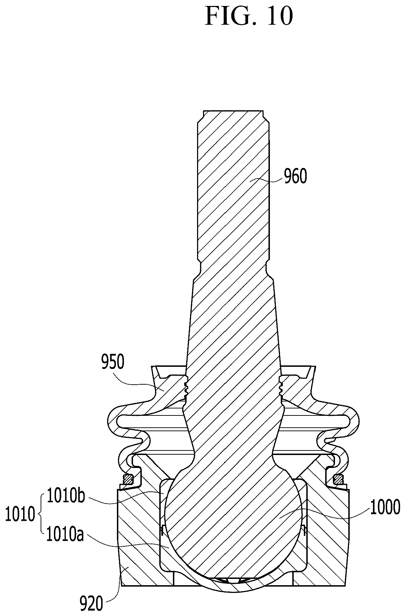

FIG. 10 is similar to FIG. 9, and the only difference between them is that the metal reinforcement 940 is not provided in the ball housing 920. It is not shown, but the metal reinforcement 940 may be formed at an exterior surface of the ball housing 920.

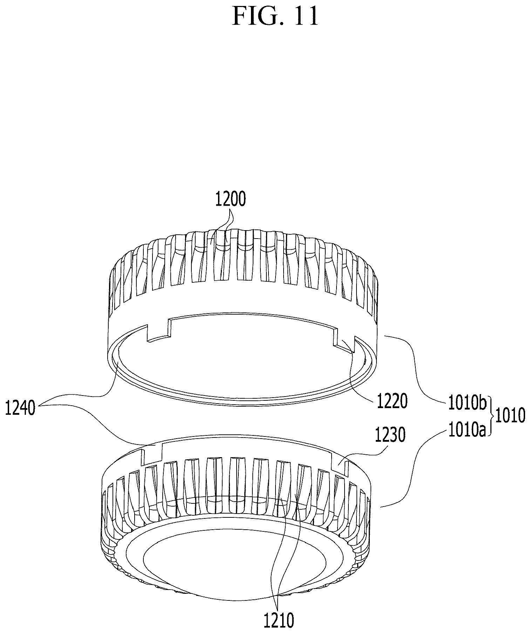

Referring to FIG. 11, the bearing 1010 includes the first bearing 1010a at a lower portion thereof and the second bearing 1010b coupled to the first bearing at an upper portion thereof.

The first bearing 1010a has a cup shape having an interior circumference covering an exterior surface of a lower hemisphere of the ball 1000. First protrusions and depressions 1210 are formed at the exterior surface of the first bearing 1010a along a circumferential direction.

The first protrusions and depressions 1210 improve adhesive force with the ball housing 920 and enhance strength. Further, the first protrusions and depressions 1210 extend upwardly or downwardly so as to not allow the bearing 1010 to rotate with respect to the ball 1000 and are arranged along the circumferential direction.

The second bearing 1010b has a ring shape having an interior circumference covering an exterior circumference of the ball 1000 around the stud 960. Second protrusions and depressions 1200 are formed at the exterior surface of the second bearing 1010b along a circumferential direction.

Stepped parts 1240 corresponding to each other are formed respectively at coupling portions of the first bearing 1010a and the second bearing 1010b. The stepped parts 1240 have a groove and a protrusion engaged to each other.

Herein, the stepped parts 1240 are formed circumferentially along coupled surfaces at which the first bearing 1010a and the second bearing 1010b are coupled.

Further, a fixing protrusion 1220 is formed at a lower end of the second bearing 1010b protruding toward the first bearing 1010a, and a fixing recess 1230 corresponding to the fixing protrusion 1220 is formed at an exterior surface of an upper end of the first bearing 1010a so as to improve strength when the first bearing 1010a is coupled to the second bearing 1010b.

As described above, the first and second bearings 1010 are strongly coupled by the stepped parts 1240, the fixing protrusion 1220, and the fixing recess 1230 formed at the coupling portions of the first and second bearings 1010.

When the ball housing 920 is insert-molded in a state in which the bearing 1010 is mounted on the ball 1000, the stepped parts 1240 prevent the resin from flowing into the coupled surfaces of the first bearing 1010a and the second bearing 1010b.

Referring to FIG. 12, it is preferable that a flowing hole 1310 is formed at a metal reinforcement 1300 provided in the ball housing 920 such that the resin can easily flow from the exterior to the interior when insert-molding.

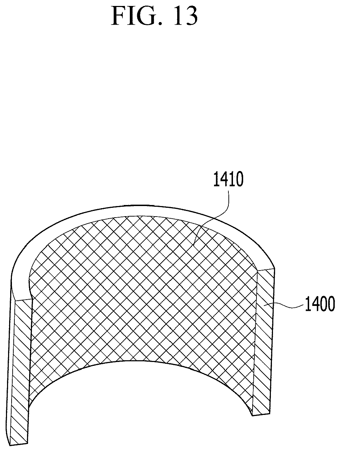

Referring to FIG. 13, a knurl is formed at at least a portion of an interior surface or an exterior surface of a metal reinforcement 1400 provided inside or outside of the ball housing 920 so as to enhance adhesive force with the resin when insert-molding. As illustrated, a knurling portion 1410 is formed at the interior circumference or the exterior surface of the metal reinforcement 1400.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [Industrial Applicability]

According to the present invention, manufacturing process is simplified and manufacturing cost is reduced by insert-molding a ball housing to a metal reinforcement and a bearing. Mounting process may be greatly improved by insert-molding the ball housing of a ball joint that is made of synthetic resin material to a rod. Since the ball housing is made of synthetic resin material, weight may be reduced and fuel economy of a vehicle may be enhanced. Since the bearing is formed as two parts, assembling of coupling portions of the ball joint may be facilitated.

Since the metal reinforcement and the bearing are insert-molded to the ball housing, manufacturing process may be simplified and manufacturing cost may be reduced. Since the first and second bearings separately manufactured are mounted on the ball, damage of the bearing may be prevented that can occur when the ball of the ball stud is press-fitted into the bearing. Since the first and second supporting portions for preventing separation of the bearing are formed when the ball housing is insert-molded, caulking process may be removed, damage of the bearing may be prevented, and sufficient pull out strength may be secured. Since the first bearing and the second bearing are separately mounted on the ball of the ball stud, assembly availability may be improved. Since the stepped parts are formed between the first bearing and the second bearing, the resin cannot flow into the bearing when the ball housing is insert-molded.

## Claims

1. A ball joint structure (100, 600) comprising:
a ball stud (110, 732) having a ball (112, 732b, 1000) formed at one end thereof;
a bearing (120, 800, 1010) comprising a first bearing (122, 820, 1010a) coupled to the ball for an interior surface thereof to slide on an exterior surface of the ball and covering an exterior surface of one side of the ball, and a second bearing (124, 810, 1010b) coupled to the ball (112, 732b, 1000) for an interior surface thereof to slide on the exterior surface of the ball and covering an exterior surface of the other side of the ball; and
a ball housing (130, 700), together with the bearing, insert-molded so as to cover the outside of the bearing, wherein one side of the first bearing (122, 820, 1010a) is coupled to one side of the second bearing (124, 810, 1010b) such that the bearing covers the exterior surface of the ball, wherein the first bearing and/or the second bearing have protrusions and depressions (123, 125, 812, 822, 1200, 1210) formed at an exterior surface thereof, **characterized in that** the ball joint structure further comprises:
a metal reinforcement (140, 1300, 1400) provided at an exterior surface of the ball housing (130, 700) and covering the ball housing, wherein a side surface of the metal reinforcement (140, 1300, 1400) is knurled.
1. A ball joint structure (100, 600) comprising:
a ball stud (110, 732) having a ball (112, 732b, 1000) formed at one end thereof;
a bearing (120, 800, 1010) comprising a first bearing (122, 820, 1010a) coupled to the ball for an interior surface thereof to slide on an exterior surface of the ball and covering an exterior surface of one side of the ball, and a second bearing (124, 810, 1010b) coupled to the ball (112, 732b, 1000) for an interior surface thereof to slide on the exterior surface of the ball and covering an exterior surface of the other side of the ball; and
a ball housing (130, 700), together with the bearing, insert-molded so as to cover the outside of the bearing, wherein one side of the first bearing (122, 820, 1010a) is coupled to one side of the second bearing (124, 810, 1010b) such that the bearing covers the exterior surface of the ball, wherein the first bearing and/or the second bearing have protrusions and depressions (123, 125, 812, 822, 1200, 1210) formed at an exterior surface thereof, **characterized in that** the ball joint structure further comprises:
a metal reinforcement (140, 1300, 1400) provided at an exterior surface of the ball housing (130, 700) and covering the ball housing, wherein a side surface of the metal reinforcement (140, 1300, 1400) is knurled.

2. The ball joint structure of claim 1, wherein the ball (112, 1000) is formed at one end of the ball stud (110, 732), the first bearing (122, 820, 1010a) covers an exterior circumference of a hemisphere portion of the ball, and the second bearing (124, 810, 1010b) is mounted at an opposite side of the first bearing so as to cover an exterior circumference of the ball (112, 1000) around the ball stud (110, 732).

3. The ball joint structure of claim 1, wherein the first bearing and the second bearing respectively have stepped parts (123, 125, 818, 1240) having shapes corresponding to each other at coupled portions.

4. The ball joint structure of claim 1, wherein one of the first bearing (122, 820, 1010a) and the second bearing (124, 810, 1010b) has a fixing protrusion (811, 1220) at a coupled surface thereof, and the other of the first bearing and the second bearing has a fixing recess (821, 1230) corresponding to the fixing protrusion (811, 1220) at a coupled surface thereof.

5. The ball joint structure of claim 1, wherein both ends of the ball housing (130, 700) are protruded inwardly so as to respectively form a first supporting portion (132) and a second supporting portion (136) for preventing separation of the bearing.

6. A ball joint structure according to claim 1, further comprising:
a rod (R) having an end portion disposed apart from the ball housing; and
a socket (710), together with the ball housing (700), insert-molded so as to connect the rod with the ball housing.

7. A ball joint structure according to claim 1, further comprising:
a bushing housing (970) distanced from the ball housing and connected to a vehicle body; and
an arm (910) connecting the ball housing with the bushing housing (970).

8. A manufacturing method of a ball joint structure (100, 600) according to claim 1, comprising:
1) mounting a bearing on a ball (112, 732b, 1000) formed at one end of a ball stud (110, 732) so as to cover the ball;
2) disposing the ball in a mold apart from the mold by a distance; and
3) insert-molding a ball housing (130, 700) and/or a socket between the bearing and the mold
4) disposing a metal reinforcement (140, 1300, 1400) between the bearing and the mold; and
5) insert-molding the ball housing (130, 700) between the bearing and the metal reinforcement.

9. The manufacturing method of claim 8, wherein the step 1) comprises:
mounting a first bearing (122, 820, 1010a) with a first stepped part (123, 125, 818, 1240) formed at an upper end thereof on a lower portion of the ball of the ball stud; and
coupling the first stepped part (123, 125, 818, 1240) with a second stepped part by placing the second bearing with the second stepped part corresponding to the first stepped part at a lower end thereof onto the ball.

10. The manufacturing method of claim 8, wherein a first supporting portion and a second supporting portion are integrally formed respectively at an upper end and a lower end of the ball housing (130, 700) and/or one side portion of the socket at the step 3).

## Patentansprüche

1. Kugelgelenkstruktur (100, 600), die umfasst:
einen Kugelzapfen (110, 732) mit einer Kugel (112, 732b, 1000), die an einem Ende davon gebildet ist;
ein Lager (120, 800, 1010), das ein erstes Lager (122, 820, 1010a), das mit der Kugel verbunden ist, damit eine Innenfläche davon auf einer Außenfläche der Kugel gleitet, und das eine Außenfläche einer Seite der Kugel bedeckt, und ein zweites Lager (124, 810, 1010b) umfasst, das mit der Kugel (112, 732b, 1000) verbunden ist, damit eine Innenfläche davon auf der Außenfläche der Kugel gleitet, und das eine Außenfläche der anderen Seite der Kugel bedeckt; und
ein Kugelgehäuse (130, 700), das gemeinsam mit dem Lager umspritzt ist, um das Äußere des Lagers zu bedecken, wobei eine Seite des ersten Lagers (122, 820, 1010a) mit einer Seite des zweiten Lagers (124, 810, 1010b) verbunden ist, so dass das Lager die Außenfläche der Kugel bedeckt, wobei das erste Lager und/oder das zweite Lager Vorsprünge und Vertiefungen (123, 125, 812, 822, 1200, 1210) aufweisen, die auf einer Außenfläche davon gebildet sind, **dadurch gekennzeichnet, dass** die Kugelgelenkstruktur des Weiteren umfasst:
eine Metallverstärkung (140, 1300, 1400), die auf einer Außenfläche des Kugelgehäuses (130, 700) bereitgestellt ist und das Kugelgehäuse bedeckt, wobei eine Seitenfläche der Metallverstärkung (140, 1300, 1400) gerändelt ist.

2. Kugelgelenkstruktur nach Anspruch 1, wobei die Kugel (112, 1000) an einem Ende des Kugelzapfens (110, 732) gebildet ist, das erste Lager (122, 820, 1010a) einen Außenumfang eines Halbkugelabschnitts der Kugel bedeckt und das zweite Lager (124, 810, 1010b) auf einer gegenüberliegenden Seite des ersten Lagers angebracht ist, um einen Außenumfang der Kugel (112, 1000) um den Kugelzapfen (110, 732) zu bedecken.

3. Kugelgelenkstruktur nach Anspruch 1, wobei das erste Lager und das zweite Lager jeweils gestufte Teile (123, 125, 818, 1240) aufweisen, deren Formen einander an verbundenen Abschnitten entsprechen.

4. Kugelgelenkstruktur nach Anspruch 1, wobei eines des ersten Lagers (122, 820, 1010a) und des zweiten Lagers (124, 810, 1010b) einen Fixierungsvorsprung (811, 1220) auf einer verbundenen Oberfläche davon aufweist, und das andere des ersten Lagers und des zweiten Lagers eine Fixierungsvertiefung (821, 1230) aufweist, die dem Fixierungsvorsprung (811, 1220) an einer verbundenen Oberfläche davon entspricht.

5. Kugelgelenkstruktur nach Anspruch 1, wobei beide Eden des Kugelgehäuses (130, 700) einwärts vorstehen, um jeweils einen ersten Trägerabschnitt (132) und einen zweiten Trägerabschnitt (136) zu bilden, um eine Trennung des Lagers zu verhindern.

6. Kugelgelenkstruktur nach Anspruch 1, die des Weiteren umfasst:
eine Stange (R) mit einem Endabschnitt, der vom Kugelgehäuse getrennt angeordnet ist; und
eine Aufnahme (710), die gemeinsam mit dem Kugelgehäuse (700) umspritzt ist, um die Stange mit dem Kugelgehäuse zu verbinden.

7. Kugelgelenkstruktur nach Anspruch 1, die des Weiteren umfasst:
ein Buchsengehäuse (970), das von dem Kugelgehäuse entfernt angeordnet und mit einer Fahrzeugkarosserie verbunden ist; und
einen Arm (910), der das Kugelgehäuse mit dem Buchsengehäuse (970) verbindet.

8. Verfahren zum Herstellen einer Kugelgelenkstruktur (100, 600) nach Anspruch 1, das umfasst:
1) Anbringen eines Lagers auf einer Kugel (112, 732b, 1000), das an einem Ende eines Kugelzapfens (110, 732) gebildet ist, um die Kugel zu bedecken;
2) Anordnen der Kugel in einem Formteil mit einem Abstand zum Formteil; und
3) Umspritzen eines Kugelgehäuses (130, 700) und/oder einer Aufnahme zwischen dem Lager und dem Formteil
4) Anordnen einer Metallverstärkung (140, 1300, 1400) zwischen dem Lager und dem Formteil, und
5) Umspritzen des Kugelgehäuses (130, 700) zwischen dem Lager und der Metallverstärkung.

9. Herstellungsverfahren nach Anspruch 8, wobei Schritt 1) umfasst:
Anbringen eines ersten Lagers (122, 820, 1010a) mit einem ersten gestuften Teil (123, 125, 818, 1240), der an einem oberen Ende davon gebildet ist, auf einem unteren Abschnitt der Kugel des Kugelzapfens; und
Verbinden des ersten gestuften Teils (123, 125, 818, 1240) mit einem zweiten gestuften Teil durch Platzieren des zweiten Lagers mit dem zweiten gestuften Teil, der dem ersten gestuften Teil entspricht, an einem unteren Ende davon auf der Kugel.

10. Herstellungsverfahren nach Anspruch 8, wobei ein erster Trägerabschnitt und ein zweiter Trägerabschnitt jeweils an einem oberen Ende und einem unteren Ende des Kugelgehäuses (130, 700) und/oder einem Seitenabschnitt der Aufnahme in Schritt 3) einstückig ausgebildet werden.

## Revendications

1. Structure de joint à rotule (100, 600) comprenant :
un pivot à rotule (110, 732) ayant une rotule (112, 732b, 1000) formée au niveau de l'une de ses extrémités ;
un palier (120, 800, 1010) comprenant un premier palier (122, 820, 1010a) couplé à la rotule pour sa surface intérieure afin de coulisser sur une surface extérieure de la rotule et recouvrant une surface extérieure d'un côté de la rotule, et un second palier (124, 810, 1010b) couplé à la rotule (112, 732b, 1000) pour sa surface intérieure afin de coulisser sur la surface extérieure de la rotule et recouvrant une surface extérieure de l'autre côté de la rotule ; et
un logement de rotule (130, 700) conjointement avec le palier, moulé par insertion afin de recouvrir l'extérieur du palier, dans laquelle un côté du premier palier (122, 820, 1010a) est couplé à un côté du second palier (124, 810, 1010b) de sorte que le palier recouvre la surface extérieure de la rotule, dans laquelle le premier palier et/ou le second palier ont des saillies et des enfoncements (123, 125, 812, 822, 1200, 1210) formés au niveau de leur surface extérieure, **caractérisée en ce que** la structure de joint à rotule comprend en outre :
un renforcement métallique (140, 1300, 1400) prévu au niveau de la surface extérieure du logement de rotule (130, 700) et recouvrant le logement de rotule, dans laquelle une surface latérale du renforcement métallique (140, 1300, 1400) est moletée.

2. Structure de joint à rotule selon la revendication 1, dans laquelle la rotule (112, 1000) est formée au niveau d'une extrémité du pivot à rotule (110, 732), le premier palier (122, 820, 1010a) recouvre une circonférence extérieure d'une partie hémisphérique de la rotule, et le second palier (124, 810, 1010b) est monté au niveau d'un côté opposé du premier palier afin de recouvrir une circonférence extérieure de la rotule (112, 1000) autour du pivot à rotule (110, 732).

3. Structure de joint à rotule selon la revendication 1, dans laquelle le premier palier et le second palier ont respectivement des parties étagées (123, 125, 818, 1240) ayant des formes correspondant entre elles au niveau des parties couplées.

4. Structure de joint à rotule selon la revendication 1, dans laquelle l'un parmi le premier palier (122, 820, 1010a) et le second palier (124, 810, 1010b) a une saillie de fixation (811, 1220) au niveau de sa surface couplée, et l'autre parmi le premier palier et le second palier a un évidement de fixation (821, 1230) correspondant à la saillie de fixation (811, 1220) au niveau de sa surface couplée.

5. Structure de joint à rotule selon la revendication 1, dans laquelle les deux extrémités du logement de rotule (130, 700) sont en saillie vers l'intérieur afin de former respectivement une première partie de support (132) et une seconde partie de support (136) pour empêcher la séparation du palier.

6. Structure de joint à rotule selon la revendication 1, comprenant en outre :
une tige (R) ayant une partie d'extrémité disposée à distance du logement de rotule ; et
une cavité (710) conjointement avec le logement de rotule (700), moulée par insertion afin de raccorder la tige avec le logement de rotule.

7. Structure de joint à rotule selon la revendication 1, comprenant en outre :
un logement de bague (970) à distance du logement de rotule et raccordé à un corps de véhicule ; et
un bras (910) raccordant le logement de rotule avec le logement de bague (970).

8. Procédé de fabrication d'une structure de joint à rotule (100, 600) selon la revendication 1, comprenant les étapes consistant à :
1) monter un palier sur une rotule (112, 732b, 1000) formée au niveau d'une extrémité d'un pivot à rotule (110, 732) afin de recouvrir la rotule ;
2) disposer la rotule dans un moule à distance du moule selon une distance ; et
3) mouler par insertion un logement de rotule (130, 700) et/ou une cavité entre le palier et le moule ;
4) disposer un renforcement métallique (140, 1300, 1400) entre le palier et le moule ; et
5) mouler par insertion le logement de rotule (130, 700) entre le palier et le renforcement métallique.

9. Procédé de fabrication selon la revendication 8, dans lequel l'étape 1) comprend les étapes consistant à :
monter un premier palier (122, 820, 1010a) avec une première partie étagée (123, 125, 818, 1240) formée au niveau de son extrémité supérieure sur une partie inférieure de la rotule du pivot à rotule ; et
coupler la première partie étagée (123, 125, 818, 1240) avec une seconde partie étagée en plaçant le second palier avec la seconde partie étagée correspondant à la première partie étagée au niveau de son extrémité inférieure sur la rotule.

10. Procédé de fabrication selon la revendication 8, dans lequel une première partie de support et une seconde partie de support sont formées de manière solidaire respectivement au niveau d'une extrémité supérieure et d'une extrémité inférieure du logement de rotule (130, 700) et/ou une partie latérale de la cavité à l'étape 3).
